# EUROPEAN PATENT SPECIFICATION

(11) **EP 1 726 470 B1**
(45) Date of publication and mention of the grant of the patent: **12.08.2009**
(21) Application number: 06252671.0
(22) Date of filing: 23.05.2006
(51) Int. Cl.: B60K 11/04, B62D 25/08

(54) **Vehicle body front part structure of automobile**
Kraftfahrzeugvorderstruktur
Structure avant de véhicule

(30) Priority: 23.05.2005 JP 2005149889
(43) Date of publication of application: 29.11.2006
(73) Proprietor: HONDA MOTOR CO., LTD., Tokyo 107-8556 (JP)
(72) Inventor: Ishizono, Manabu HONDA R&D CO., LTD., Saitama 351-0193 (JP)
(74) Representative: Piésold, Alexander James

(56) References cited:
- EP-A- 0 178 266
- US-A- 5 271 473
- US-A1- 2002 056 541
- PATENT ABSTRACTS OF JAPAN vol. 2000, no. 04, 31 August 2000 (2000-08-31) -& JP 2000 025466 A (SUZUKI MOTOR CORP), 25 January 2000 (2000-01-25)
- PATENT ABSTRACTS OF JAPAN vol. 2003, no. 12, 5 December 2003 (2003-12-05) -& JP 2004 338668 A (AISIN SEIKI CO LTD; AISIN KEIKINZOKU CO LTD; TOYOTA MOTOR CORP; DENSO), 2 December 2004 (2004-12-02)
- PATENT ABSTRACTS OF JAPAN vol. 016, no. 293 (M-1273), 29 June 1992 (1992-06-29) -& JP 04 078774 A (MAZDA MOTOR CORP), 12 March 1992 (1992-03-12)

## Description

The present invention relates to a method for assembling a vehicle body front part structure of an automobile in which an air conditioning capacitor provided on a front side and a radiator provided on a rear side are superposed in a longitudinal direction and supported on a bulkhead disposed at a front part of a vehicle body.

Japanese Utility Model Application.Laid-open No. 4-20655 discloses a vehicle body structure in which left and right front side frames 1 and 1 are connected together by a shroud 2 having a rectangular frame shape, left and right opposite side portions of a radiator 3 as well as left and right opposite side portions of an air conditioning capacitor 4 are fastened together to rear surfaces and front surfaces of a pair of lower brackets 25 and 25 provided on the front side frames 1 and 1, and a pair of upper brackets 10 and 10 provided on an upper surface of the radiator 3 are fixed to an upper surface of the shroud 2 and an upper surface of the air conditioning capacitor 4.

In some cases, engines with different cylinder capacities are mounted on a common vehicle body. When a large-sized engine is mounted, it is desirable to shift mounting positions of an air conditioning capacitor and a radiator to the vehicle body front side in order to avoid interference with the engine; and when a small-sized engine is mounted, it is desirable to shift the mounting positions of the air conditioning capacitor and the radiator to the vehicle body rear side since an extra space is obtained in an engine room. This is because if the mounting positions of the air conditioning capacitor and the radiator are shifted to the vehicle body rear side, when the front part of the vehicle body suffers a light collision, the air conditioning capacitor and the radiator are difficult to be damaged leading to elimination of the cost for replacing the components.

The present invention has been achieved in view of the above circumstances, and has an object to enhance general-purpose property by making mounting positions of an air conditioning capacitor and a radiator with respect to a common bulkhead changeable in a longitudinal direction.

US-A-5;271,473 and JP 2000-25466A, which disclose the preamble of claim 1, teach a method for assembling a vehicle body front part structure of an automobile comprising: mounting an air conditioning capacitor and a radiator to a bulkhead disposed at a front part of a vehicle body using a bracket group, wherein the bulkhead comprises a bulkhead upper part and a bulkhead lower part which is displaced forward of the vehicle body relative to the bulkhead upper part, and the air conditioning capacitor and the radiator are supported on the bulkhead upper and lower parts and such that the air conditioning capacitor is positioned longitudinally in front of the radiator.

The present invention is characterized by: selecting a first bracket group as the said bracket group when the air conditioning capacitor and the radiator are to be supported at a first position on the vehicle body front part structure which is forward of a second position on the structure; or selecting a second bracket group as the said bracket group when the air conditioning capacitor and the radiator are to be supported at the second position on the vehicle body front part structure; and using a top surface of the bulkhead lower part as a direct support either for said radiator in said first position, or for said air conditioning capacitor in said second position.

In this arrangement, when the air conditioning capacitor on the front side and the radiator on the rear side are superposed in the longitudinal direction and supported on the bulkhead disposed at the front part of the vehicle body, in the case where the air conditioning capacitor and the radiator are supported at the positions forward with respect to the bulkhead in order to avoid interference with the engine, the first bracket group is selected; and when the air conditioning capacitor and the radiator are supported at the positions rearward with respect to the bulkhead in order to prevent damage to the air conditioning capacitor and the radiator at the time of a light collision, the second bracket group is selected. Therefore, general-purpose property can be enhanced by changing the mounting positions of the air conditioning capacitor and the radiator in the longitudinal direction while the common bulkhead is used.

At least one of the first and second bracket groups preferably includes a bracket which is formed with a long hole for permitting vertical slide motion of the bracket with respect to the bulkhead upper part, and the air conditioning capacitor and the radiator are preferably formed with vertically projecting support pins, respectively, which are fitted into said bracket in the state of use, the method preferably further comprising: when the air conditioning capacitor and the radiator are to be supported at one of said first and second positions, fitting the support pin of the radiator into the bracket, sliding the bracket upward relative to the radiator while temporarily fixing a fixing member through the long hole to the bulkhead upper part and holding the fitting between the support pin and the bracket ; placing the air conditioning capacitor below the bracket, and then sliding the bracket downward relative to the bulkhead upper part to thereby bring the support pin of the air conditioning capacitor into fitting with the bracket.

The first bracket group preferably comprises a first bracket which supports upper ends of the air conditioning capacitor and the radiator at positions forward of the bulkhead upper part, and a second bracket which supports a lower end of the air conditioning capacitor at a position forward of the bulkhead lower part; and the second bracket group preferably comprises a third bracket which supports the upper end of the air conditioning capacitor at a position forward of the bulkhead upper part, a fourth bracket which supports the upper end of the radiator at a position rearward of the bulkhead upper part, and a fifth bracket which supports a lower end of the radiator rearward of the bulkhead lower part.

With this preferred arrangement, the first bracket group comprises the first bracket which supports the upper ends of the air conditioning capacitor and the radiator at the positions forward of the bulkhead upper part on the rear side, and the second bracket which supports the lower end of the air conditioning capacitor at the position forward of the bulkhead lower part on the front side. Therefore, the air conditioning capacitor and the radiator can be supported at the position forward with respect to the bulkhead. The second bracket group comprises the third bracket which supports the upper end of the air conditioning capacitor at the position forward of the bulkhead upper part on the rear side, the fourth bracket which supports the upper end of the radiator at the position rearward of the bulkhead upper part on the rear side, and the fifth bracket which supports the lower end of the radiator rearward of the bulkhead lower part on the front side. Therefore, the air conditioning capacitor and the radiator can be supported at the positions rearward with respect to the bulkhead.

The fifth bracket preferably includes a radiator support portion that supports the lower end of the radiator, a reinforcing portion of a box structure that connects to the radiator support portion, and a plate-shaped flange portion that connects to the reinforcing portion, and the fifth bracket is fixed to the bulkhead lower part in at least the reinforcing portion and the flange portion.

With this preferred arrangement, the fifth bracket supporting the lower portion of the radiator at the bulkhead lower part includes the radiator support portion, the reinforcing portion of the box structure, and the plate-shaped flange portion, and at least the reinforcing portion and the flange portion are fixed to the bulkhead lower part. Therefore, the rigidity of the fifth bracket is enhanced, thereby firmly supporting the heavy radiator at the bulkhead lower part.

The above-mentioned object, other objects, characteristics, and advantages of the present invention will become apparent from a preferred embodiment, which will be described in detail below by reference to the attached drawings, in which:
FIG. 1 is a perspective view showing the mounting state of an air conditioning capacitor and a radiator of large-sized engine specifications;
FIG. 2 is an exploded perspective view of the air conditioning capacitor, the radiator and a bulkhead of the large-sized engine specifications;
FIG. 3 is a sectional view taken along a line 3-3 in FIG. 1;
FIG. 4 is an explanatory view of an operation at the time of mounting the air conditioning capacitor and the radiator;
FIG. 5 is a perspective view showing the mounting state of an air conditioning capacitor and a radiator of small-sized engine specifications;
FIG. 6 is an exploded perspective view of the air conditioning capacitor, the radiator and a bulkhead of the small-sized engine specifications; and
FIG. 7 is a sectional view taken along a line 7-7 in FIG. 5.

### DESCRIPTION OF THE PREFERRED EMBODIMENT

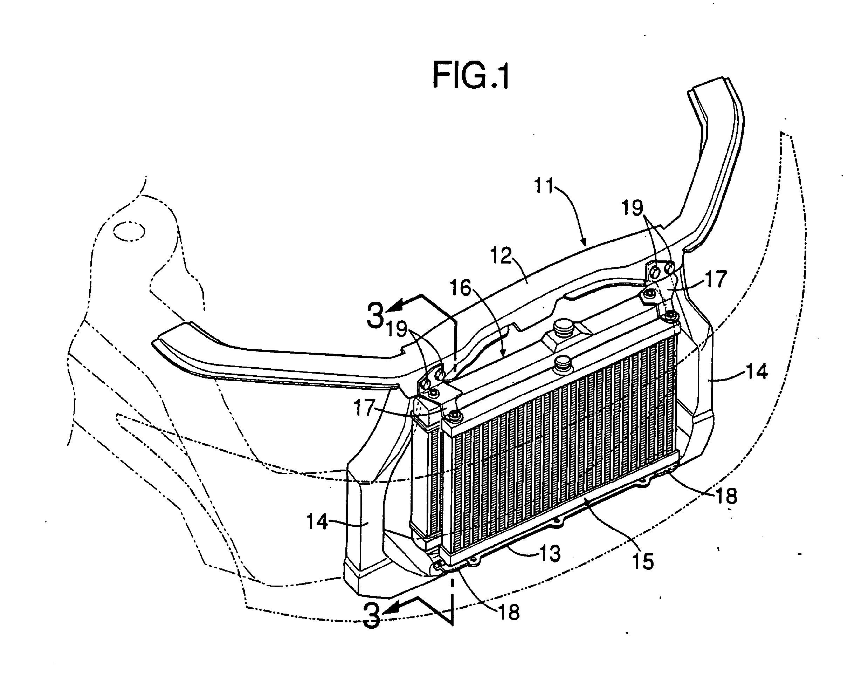

FIGS. 1 to 4 show a structure in which an air conditioning capacitor 15 and a radiator 16 are supported at positions forward of a vehicle body as much as possible to secure a space for mounting a large-sized engine in an engine room.

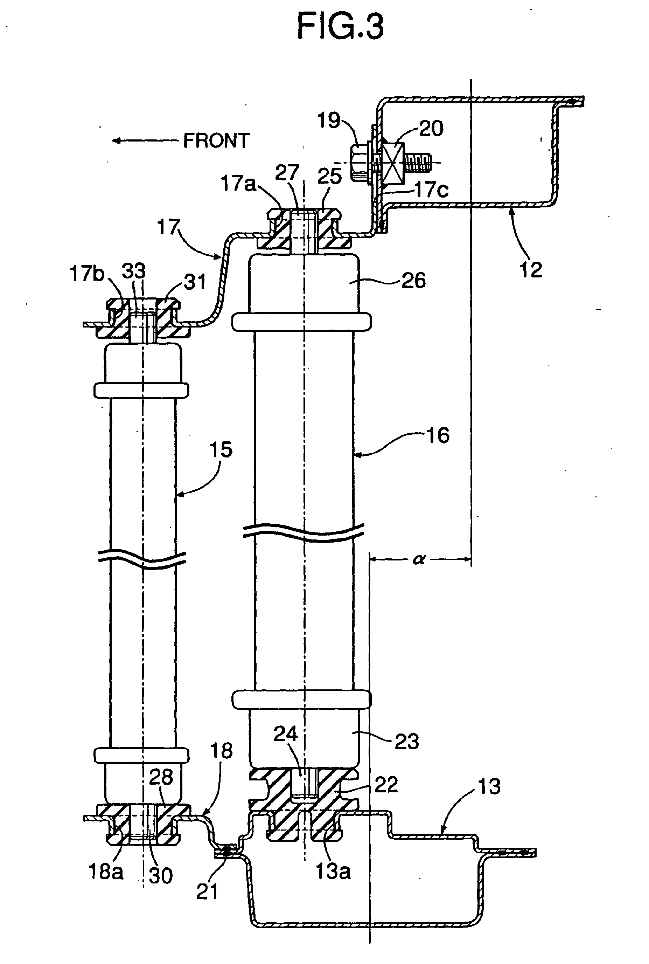

A bulkhead 11 is disposed at a vehicle body front part of an automobile, and comprises a bulkhead upper part 12 extending in a lateral direction of the vehicle body, a bulkhead lower part 13 extending in the lateral direction of the vehicle body under the bulkhead upper part 12, and a pair of left and right bulkhead sides 14 and 14 which vertically connect an laterally intermediate portion of the bulkhead upper part 12 to left and right opposite end portions of the bulkhead lower part 13. The bulkhead lower part 13 is disposed while being displaced forward of the vehicle body by a distance α, with respect to the bulk head upper 12 (see FIG. 3).

At the bulkhead 11, the air conditioning capacitor 15 located on the front side of the vehicle body and the radiator 16 located on the rear side of the vehicle body are supported in a state in which the air conditioning capacitor 15 and the radiator 16 are superposed in the longitudinal direction by using two first brackets 17 and 17 provided at the bulkhead upper part 12, and two second brackets 18 and 18 provided at the bulkhead lower part 13. The first brackets 17 and 17 and the second brackets 18 and 18 constitute a first bracket group of the present invention.

The first bracket 17 is fixed to a front surface of the bulkhead upper part 12 with two bolts 19 and two nuts 20, extends forward of the vehicle body, and has a radiator support hole 17a formed in its rear portion and an air conditioning capacitor support hole 17b formed in its front portion. The second bracket 18 is welded 21 to a front surface of the bulkhead lower part 13, extends forward of the vehicle body, and has an air conditioning capacitor support hole 18a formed in its front portion.

Two support pins 24 and 24 projectingly provided on an undersurface of a lower tank 23 of the radiator 16 are fitted into rubber bushes 22 and 22 fixed into the two radiator support holes 13a which is formed on a top surface of the bulkhead lower part 13. Two support pins 27 and 27 projectingly provided on a top surface of an upper tank 26 of the radiator 16 are fitted into rubber bushes 25 and 25 which are fixed into radiator support holes 17a and 17a of the first bracket 17 and 17, whereby the radiator 16 is supported at the bulkhead 11.

Two support pins 30 and 30 projectingly provided on an undersurface of the air conditioning capacitor 15 are fitted into rubber bushes 28 and 28 which are fixed into air conditioning capacitor support holes 18a and 18a of the second brackets 18 and 18. Two support pins 33 and 33 proj ectinglyprovided on a top surface of the air conditioning capacitor 15 are fitted into rubber bushes 31 and 31 which are fixed into air conditioning capacitor support holes 17b and 17b of the first brackets 17 and 17, whereby the air conditioning capacitor 15 is supported at the bulkhead 11.

As a result, as is obvious from FIG. 3, the radiator 16 is supported on the bulkhead lower part 13 which is located forward of the bulkhead upper part 12, and the air conditioning capacitor 15 is supported further forward of the radiator 16, whereby a space is secured in the engine room behind the bulkhead 11 so that a large-sized engine can be installed therein.

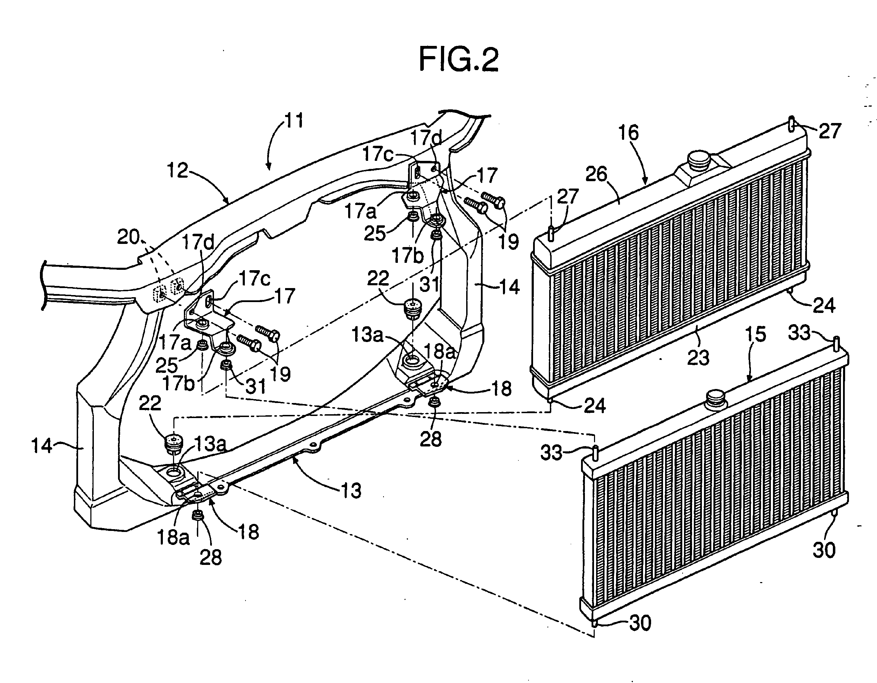

As is obvious from FIG. 2, two bolt holes through which the two bolts 19 and 19 penetrate so as to fix the first bracket 17 to the bulkhead upper part 12 are constituted by a long hole 17 and a circular hole 17d. When the air conditioning capacitor 15 and the radiator 16 are assembled to the bulkhead 11, the bolt 19 is inserted through only the long hole 17c of the first bracket 17 and temporarily fastened to the nut 20, and the radiator 16 is temporarily supported at the rubber bush 22 of the bulkhead lower part 13 and the rubber bush 25 of the first bracket 17.

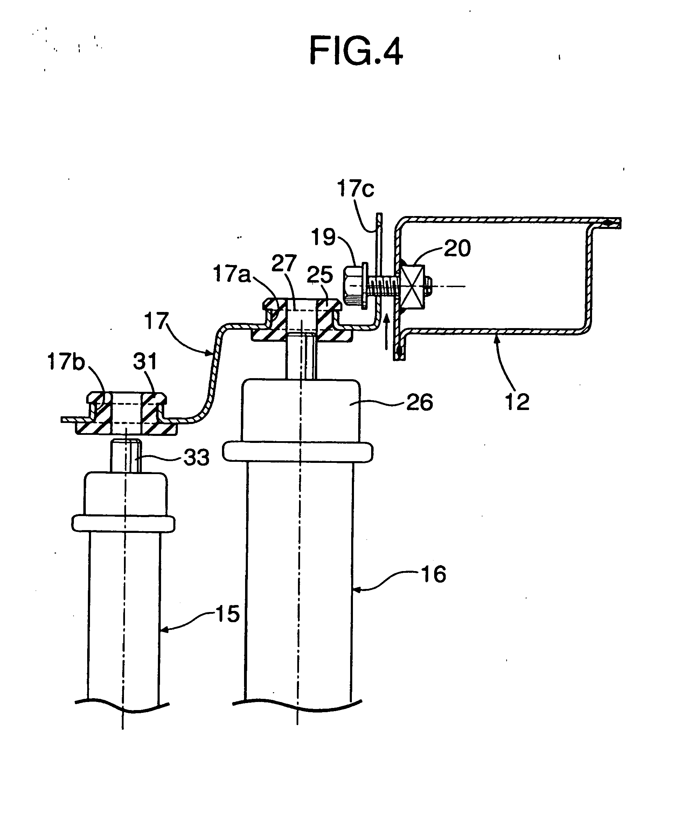

Subsequently, as shown in FIG. 4, the first bracket 17 is slid upward through the long hole 17c. At this time, the rubber bush 25 of the first bracket 17 slides upward with respect to the support pin 27 of the upper tank 26 of the radiator 16, but does not disengage from the support pin 27, and therefore, the radiator 16 does not fall even if the radiator 16 is not held with a hand. In this state, the support pin 30 on the undersurface of the air conditioning capacitor 15 is fitted into the rubber bush 28 of the second bracket 18; the support pin 33 on the top surface of the capacitor 15 is caused to face the lower side of the rubber bush 31 of the first bracket 17; and then the first bracket 17 is slid downward by the long hole 17c, whereby the rubber bush 31 of the first bracket 17 is fitted onto the support pin 33 on the top surface of the air conditioning capacitor 15, as shown in FIG. 3, to support both the radiator 16 and the air conditioning capacitor 15 on the bulkhead 11.

Finally, the bolt 19 which has been inserted through the long hole 17c and temporarily fastened is completely fastened, and the bolt which is inserted through the circular hole 17d is fastened to the nut 20, thereby completing assembly of the air conditioning capacitor 15 and the radiator 16.

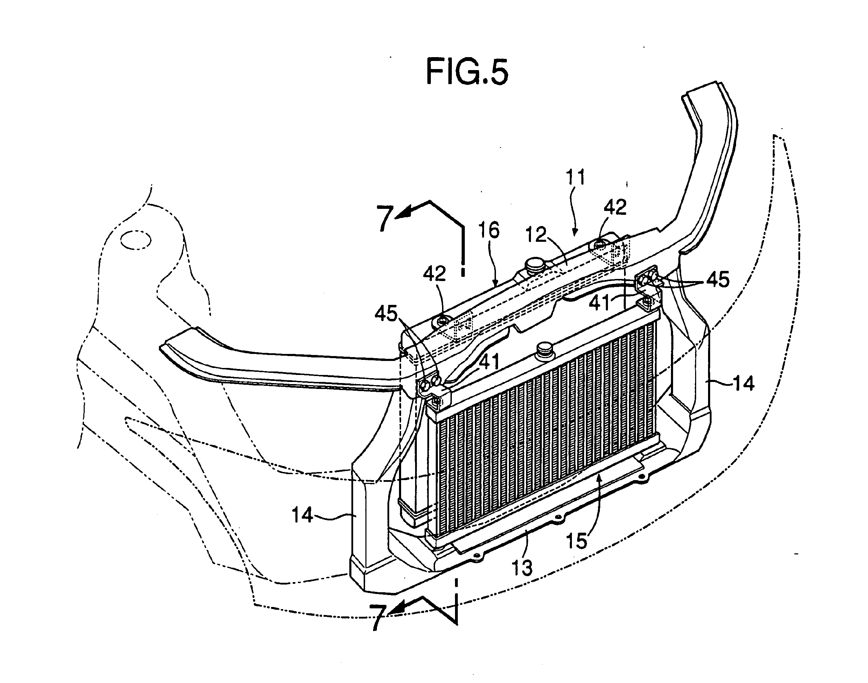

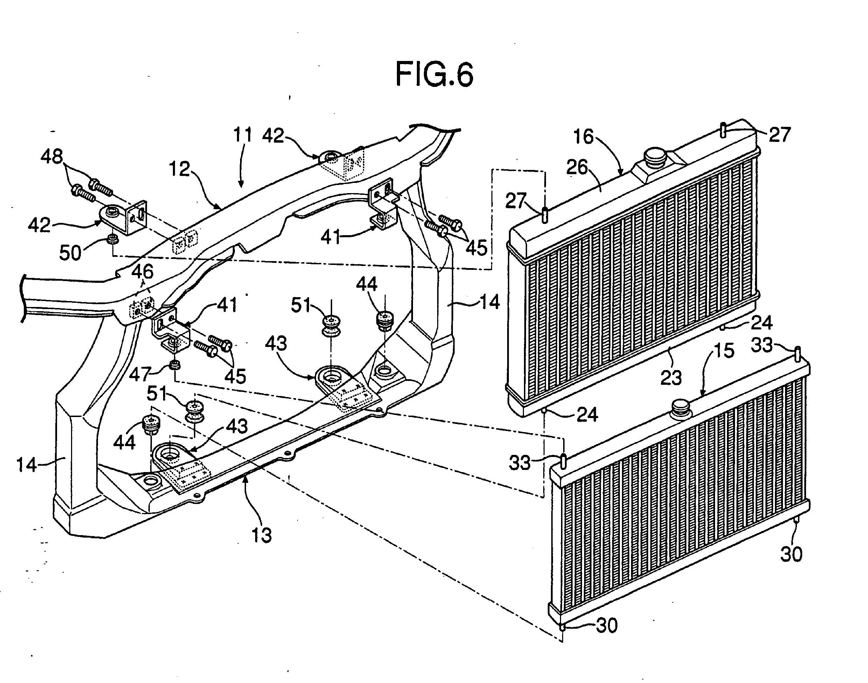

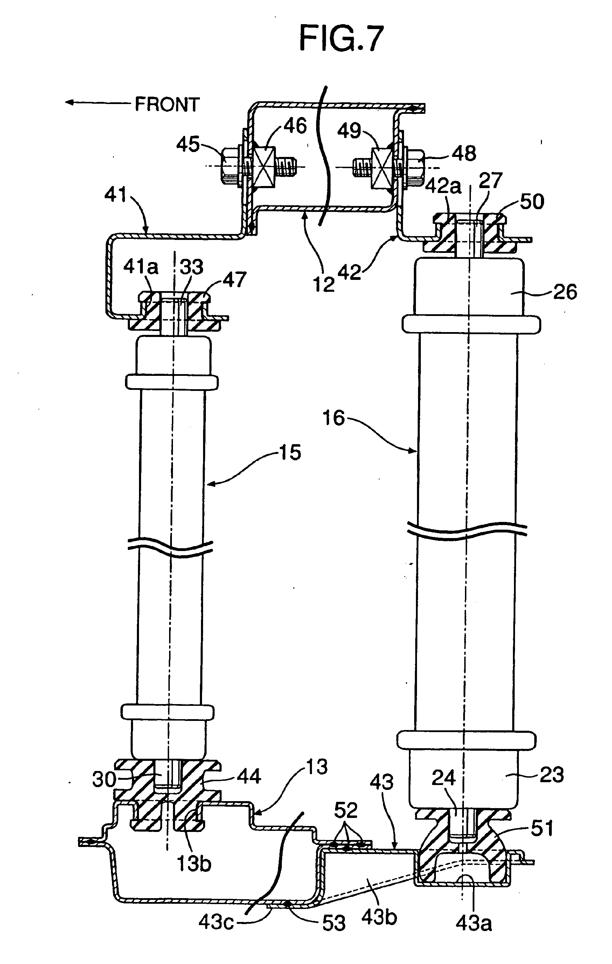

FIGS. 5 to 7 show a structure in which the air conditioning capacitor 15 and the radiator 16 are supported at positions rearward of the vehicle body as much as possible to prevent damage to the air conditioning capacitor 15 and the radiator 16 at the time of a light collision when a small-sized engine is installed in the engine room.

The air conditioning capacitor 15 is supported by the bulkhead lower part 13 and a pair of third brackets 41 and 41 provided at left and right opposite sides of the front surface of the bulkhead upper part 12. The radiator 16 is supported by a pair of fourth brackets 42 and 42 provided at left and right opposite sides of the rear surface of the bulkhead upper part 12 and a pair of fifth brackets 43 and 43 provided at left and right opposite sides of the rear surface of the bulkhead lower part 13. These third brackets 41 and 41, the fourth brackets 42 and 42 and the fifth brackets 43 and 43 constitute a second bracket group of the present invention.

The support pins 30 and 30 on the lower surface of the air conditioning capacitor 15 are fitted into rubber bushes 44 and 44 fixed into air conditioning capacitor support holes 13b and 13b of the bulkhead lower part 13. Air conditioning capacitor support holes 41a and 41a are formed in the third brackets 41 and 41 fixed to the front surface of the bulkhead upper part 12 with two bolts 45 and 45 and two nuts 46 and 46. The support pins 33 and 33 on the top surface of the air conditioning capacitor 15 are fitted into rubber bushes 47 and 47 fixed into the air conditioning capacitor support holes 41a and 41a. Thereby, the air conditioning capacitor 15 is supported above the bulkhead lower part 13.

Radiator support holes 42a and 42a are formed in the fourth brackets 42 and 42 fixed to the rear surface of the bulkhead upper part 12 with bolts 48 and 48 and nuts 49 and 49. The support pins 27 and 27 of the upper tank 26 are fitted into rubber bushes 50 and 50 fixed into the radiator support holes 42a and 42a. Radiator support holes 43a and 43a are formed in the fifth brackets 43 and 43 fixed to the rear surface of the bulkhead lower part 13. The support pins 24 and 24 of the lower tank 23 of the radiator 16 are fitted into rubber bushes 51 and 51 fixed into the radiator support holes 43a and 43a. Thereby, the radiator 16 is supported behind the air conditioning capacitor 15.

The fifth bracket 43 supporting the radiator 16 which is heavy as compared with the air conditioning capacitor 15 includes a reinforcing portion 43b which connects to the radiator support hole 43a and which has a box structure with the bottom surface opened, and a plate-shaped flange portion 43c which connects to the reinforcing portion 43b. At least two spots of the reinforcing portion 43b and the flange portion 43c are welded 52, 53 to the bulkhead lower part 13. The reinforcing portion 43b of the box structure is provided at the fifth bracket 43, and the fifth bracket 43 is welded 52, 53 to the bulkhead lower part 13 at the two spots of the reinforcing portion 43b and the flange 43c, whereby the rigidity of the fifth bracket 43 is enhanced to firmly support the radiator 16.

As described above, when the air conditioning capacitor 15 and the radiator 16 are supported at the positions forward with respect to the bulkhead 11 in order to avoid interference with the engine, the first bracket group comprising the first and the second brackets 17 and 17; 18 and 18 is used; and when the air conditioning capacitor 15 and the radiator 16 are supported at the positions rearward with respect to the bulkhead 11 in order to prevent damage to the air conditioning capacitor 15 and the radiator 16 at the time of a light collision, the second bracket group comprising the third to fifth brackets 41 and 41; 42 and 42; 43 and 43 is used. Therefore, general-purpose property can be enhanced by changing the mounting positions of the air conditioning capacitor 15 and the radiator 16 in the longitudinal direction while using the common bulkhead 11.

The embodiment of the present invention is described thus far, but the present invention is not limited to the above described embodiment, and various design changes can be made without departing from the present invention described in claims.

## Claims

1. A method for assembling a vehicle body front part structure of an automobile comprising:
mounting an air conditioning capacitor (15) and a radiator (16) to a bulkhead (11) disposed at a front part of a vehicle body using a bracket group, wherein the bulkhead (11) comprises a bulkhead upper part (12) and a bulkhead lower part (13) which is displaced forward of the vehicle body relative to the bulkhead upper part (12), and the air conditioning capacitor (15) and the radiator (16) are supported on the bulkhead upper and lower parts (12) and (13) such that the air conditioning capacitor (15) is positioned longitudinally in front of the radiator (16);
**characterized by**:
selecting a first bracket group (17, 18) as the said bracket group when the air conditioning capacitor (15) and the radiator (16) are to be supported at a first position on the vehicle body front part structure which is forward of a second position on the structure;
or
selecting a second bracket group (41, 42, 43) as the said bracket group when the air conditioning capacitor (15) and the radiator (16) are to be supported at the second position on the vehicle body front part structure; and
using a top surface of the bulkhead lower part (13) as a direct support either for said radiator (16) in said first position, or for said air conditioning capacitor (15) in said second position.

2. A method for assembling a vehicle body front part structure of an automobile as claimed in claim 1, wherein at least one of the first and second bracket groups includes a bracket (17) which is formed with a long hole (17c) for permitting vertical slide motion of the bracket (17) with respect to the bulkhead upper part (12), and the air conditioning capacitor (15) and the radiator (16) are formed with vertically projecting support pins (33, 27), respectively, which are fitted into said bracket (17) in the state of use,
the method further comprising:
when the air conditioning capacitor (15) and the radiator (16) are to be supported at one of said first and second positions, fitting the support pin (27) of the radiator (16) into the bracket (17),
sliding the bracket (17) upward relative to the radiator (16) while temporarily fixing a fixing member (19, 20) through the long hole (17c) to the bulkhead upper part (12) and holding the fitting between the support pin (27) and the bracket (17);
placing the air conditioning capacitor (15) below the bracket (17), and
then sliding the bracket (17) downward relative to the bulkhead upper part (12) to thereby bring the support pin (33) of the air conditioning capacitor (15) into fitting with the bracket (17).

3. A method for assembling a vehicle body front part structure of an automobile as claimed in claim 1,
wherein the first bracket group comprises a first bracket (17) which supports upper ends of the air conditioning capacitor (15) and the radiator (16) at positions forward of the bulkhead upper part (12), and a second bracket (18) which supports a lower end of the air conditioning capacitor (15) at a position forward of the bulkhead lower part (13); and
the second bracket group comprises a third bracket (41) which supports the upper end of the air conditioning capacitor (15) at a position forward of the bulkhead upper part (12), a fourth bracket (42) which supports the upper end of the radiator (16) at a position rearward of the bulkhead upper part (12), and a fifth bracket (43) which supports a lower end of the radiator (16) rearward of the bulkhead lower part (13).

4. A method for assembling a vehicle body front part structure of an automobile as claimed in claim 3, wherein the fifth bracket (43) includes a radiator support portion (43a) that supports the lower end of the radiator (16), a reinforcing portion (43b) of a box structure that connects to the radiator support portion (43a), and as plate-shaped flange portion (43c) that connects to the reinforcing portion (43b), and the fifth bracket (43) is fixed to the bulkhead lower part (13) in at least the reinforcing portion (43b) and the flange portion (43c).

## Patentansprüche

1. Verfahren zum Zusammenbauen einer Fahrzeugkörper-Vorderteilstruktur eines Kraftfahrzeugs, umfassend:
Montieren eines Klimaanlage-Kondensators (15) und eines Kühlers (16) an einer in einem vorderen Teil eines Fahrzeugkörpers angeordneten Trennwand (11) unter Verwendung einer Halterungsgruppe, wobei die Trennwand (11) einen Trennwandoberteil (12) und einen in Vorwärtsrichtung des Fahrzeugkörpers relativ zum Trennwandoberteil (12) versetzt angeordneten Trennwandunterteil (13) umfasst und der Klimaanlage-Kondensator (15) und der Kühler (16) derart auf dem Trennwandoberteil (12) bzw. dem Trennwandunterteil (13) gehaltert ist, dass der Klimaanlage-Kondensator (15) in Längsrichtung vor dem Kühler (16) angeordnet ist;
**gekennzeichnet durch**:
Wählen einer ersten Halterungsgruppe (17, 18) als die Halterungsgruppe, wenn der Klimaanlage-Kondensator (15) und der Kühler (16) an einer ersten Position auf der Fahrzeugkörper-Vorderteilstruktur zu haltern sind, die sich vor einer zweiten Position der Struktur befindet;
oder
Wählen einer zweiten Halterungsgruppe (41, 42, 43) als die Halterungsgruppe, wenn der Klimaanlage-Kondensator (15) und der Kühler (16) an der zweiten Position auf der Fahrzeugkörper-Vorderteilstruktur zu haltern sind; und
Verwenden einer oberen Fläche des Trennwandunterteils (13) als eine direkte Halterung entweder für den Kühler (16) an der ersten Position oder den Klimaanlage-Kondensator (15) an der zweiten Position.

2. Verfahren zum Zusammenbauen einer Fahrzeugkörper-Vorderteilstruktur eines Kraftfahrzeugs gemäß Anspruch 1, bei welchem die erste und/oder die zweite Halterungsgruppe eine Halterung (17) einschließt, die mit einem Langloch (17c) ausgebildet ist, um eine vertikale Verschiebebewegung der Halterung (17) bezüglich des Trennwandoberteils (12) zuzulassen, und der Klimaanlage-Kondensator (15) bzw. der Kühler (16) mit vertikal vorspringenden Halterungsstiften (33, 27) ausgebildet ist, die im Verwendungszustand in die Halterung (17) eingepasst sind,
wobei das Verfahren ferner umfasst:
Einpassen des Halterungsstifts (27) des Kühlers (16) in die Halterung (17), wenn der Klimaanlage-Kondensator (15) und der Kühler (16) in der ersten oder der zweiten Position zu haltern sind,
Verschieben der Halterung (17) relativ zum Kühler (16) nach oben, während ein Befestigungsglied (19, 20) vorübergehend durch das Langloch (17c) am Trennwandoberteil (12) befestigt wird und die Passung zwischen dem Halterungsstift (27) und der Halterung (17) gehalten wird;
Anordnen des Klimaanlage-Kondensators (15) unter der Halterung (17), und
dann Verschieben der Halterung (17) relativ zum Trennwandoberteil (12) nach unten, wodurch der Halterungsstift (33) des Klimaanlage-Kondensators (15) in Passung mit der Halterung (17) gebracht wird.

3. Verfahren zum Zusammenbauen einer Fahrzeugkörper-Vorderteilstruktur eines Kraftfahrzeugs gemäß Anspruch 1,
bei welchem die erste Halterungsgruppe eine erste Halterung (17) umfasst, die obere Enden des Klimaanlage-Kondensators (15) und des Kühlers (16) an sich vor dem Trennwandoberteil (12) befindenden Positionen haltert, sowie eine zweite Halterung (18), die ein unteres Ende des Klimaanlage-Kondensators (15) an einer sich vor dem Trennwandunterteil (13) befindenden Position haltert; und
die zweite Halterungsgruppe eine dritte Halterung (41) umfasst, die das obere Ende des Klimaanlage-Kondensators (15) an einer sich vor dem Trennwandoberteil (12) befindenden Position haltert, eine vierte Halterung (42), die das obere Ende des Kühlers (16) an einer sich hinter dem Trennwandoberteil (12) befindenden Position haltert, sowie eine fünfte Halterung (43), die ein unteres Ende des Kühlers (16) an einer sich hinter dem Trennwandunterteil (13) befindenden Position haltert.

4. Verfahren zum Zusammenbauen einer Fahrzeugkörper-Vorderteilstruktur eines Kraftfahrzeugs gemäß Anspruch 3, bei welchem die fünfte Halterung (43) einen das untere Ende des Kühlers (16) halternden Kühlerhalterungsabschnitt (43a), einen mit dem Kühlerhalterungsabschnitt (43a) verbundenen, eine Kastenstruktur aufweisenden Verstärkungsabschnitt (43b) und einen mit dem Verstärkungsabschnitt (43b) verbundenen, plattenförmigen Flanschabschnitt (43c) einschließt, und wobei die fünfte Halterung (43) zumindest in dem Verstärkungsabschnitt (43b) und dem Flanschabschnitt (43c) am Trennwandunterteil (13) befestigt ist.

## Revendications

1. Procédé d'assemblage d'une structure avant de véhicule comprenant :
le montage d'un condensateur de conditionnement d'air (15) et d'un radiateur (16) sur une paroi de séparation (11) disposée sur une partie avant d'un corps de véhicule utilisant un groupe de supports, dans lequel la paroi de séparation (11) comprend une partie supérieure de paroi de séparation (12) et une partie inférieure de paroi de séparation (13) qui est déplacée à l'avant du corps de véhicule par rapport à la partie supérieure de paroi de séparation (12), et le condensateur de conditionnement d'air (15) et le radiateur (16) sont supportés sur les parties supérieures et inférieures de paroi de séparation (12) et (13) de sorte que le condensateur de conditionnement d'air (15) soit positionné longitudinalement en face du radiateur (16) ;
**caractérisé par** :
la sélection d'un premier groupe de supports (17, 18) comme dit groupe de supports lorsque le condensateur de conditionnement d'air (15) et le radiateur (16) doivent être supportés à une première position sur la structure avant de véhicule qui est à l'avant d'une seconde position sur la structure ;
ou
la sélection d'un second groupe de supports (41, 42, 43) comme dit groupe de supports lorsque le condensateur de conditionnement d'air (15) et le radiateur (16) doivent être supportés à la seconde position sur la structure avant de véhicule ; et
l'utilisation d'une surface supérieure de la partie inférieure de paroi de séparation (13) comme un support direct soit pour ledit radiateur (16) dans ladite première position soit pour ledit condensateur de conditionnement d'air (15) dans ladite seconde position.

2. Procédé d'assemblage d'une structure avant de véhicule selon la revendication 1, dans lequel au moins l'un du premier et du second groupes de supports comporte un support (17) qui est formé d'un long trou (17c) pour permettre le mouvement de glissement vertical du support (17) par rapport à la partie supérieure de paroi de séparation (12), et le condensateur de conditionnement d'air (15) et le radiateur (16) sont formés respectivement de goupilles de soutien (33, 27) en saillie verticale qui sont insérées dans ledit support (17) à l'état d'usage,
le procédé comprenant en outré :
lorsque le condensateur de conditionnement d'air (15) et le radiateur (16) doivent être supportés sur l'une desdites premières et secondes positions, l'insertion de la goupille de soutien (27) du radiateur (16) dans le support (17),
le glissement du support (17) vers le haut par rapport au radiateur (16) tout en fixant temporairement un élément de fixation (19, 20) au travers du long trou (17c) à la partie supérieure de paroi de séparation (12) et maintenant l'insertion entre la goupille de soutien (27) et le support (17) ;
le placement du condensateur de conditionnement d'air (15) au-dessous du support (17),
puis le glissement du support (17) vers le bas par rapport à la partie supérieure de paroi de séparation (12) pour amener par ce moyen la goupille de soutien (33) du condensateur de conditionnement d'air (15) en insertion avec le support (17).

3. Procédé d'assemblage d'une structure avant de véhicule selon la revendication 1,
dans lequel le premier groupe de support comprend un premier support (17) qui supporte des extrémités supérieures du condensateur de conditionnement d'air (15) et du radiateur (16) à des positions à l'avant de la partie supérieure de paroi de séparation (12), et un second support (18) qui supporte une extrémité inférieure du condensateur de conditionnement d'air (15) à une position à l'avant de la partie inférieure de paroi de séparation (13) ; et
le second groupe de support comprend un troisième support (41) qui supporte l'extrémité supérieure du condensateur de conditionnement d'air (15) à une position à l'avant de la partie supérieure de paroi de séparation (12), un quatrième support (42) qui supporte l'extrémité supérieure du radiateur (16) à une position à l'arrière de la partie supérieure de paroi de séparation (12) et un cinquième support (43) qui supporte une extrémité inférieure du radiateur (16) à l'arrière de la partie inférieure de paroi de séparation (13).

4. Procédé d'assemblage d'une structure avant de véhicule selon la revendication 3, dans lequel le cinquième support (43) comporte une partie de support de radiateur (43a) qui supporte l'extrémité inférieure du radiateur (16), une partie de renforcement (43b) d'une structure en forme de caisse qui relie la partie de support du radiateur (43a) et une partie de bride en forme de plaque (43c) qui relie la partie de renforcement (43b), et le cinquième support (43) est fixé à la partie inférieure de paroi de séparation (13) dans au moins la partie de renforcement (43b) et la partie de bride (43c).
